# EUROPÄISCHE PATENTSCHRIFT

(11) **EP 0 557 779 B1**
(45) Veröffentlichungstag und Bekanntmachung des Hinweises auf die Patenterteilung: **13.08.1997**
(21) Anmeldenummer: 93101958.2
(22) Anmeldetag: 08.02.1993
(51) Int. Cl.: H04M 11/02

(54) **Telekommunikationssystem mit einem als Türfreisprechstelle ausgebildeten Endgerät**
Telecommunication system with a hands-free door telephone
Système de télécommunication avec un interphone à mains libre

(30) Priorität: 26.02.1992 DE 4205915
(43) Veröffentlichungstag der Anmeldung: 01.09.1993
(73) Patentinhaber: SIEMENS AKTIENGESELLSCHAFT, 80333 München (DE)
(72) Erfinder: Brune, Georg, Dr. Ing., W-5870 Hemer (DE)

(56) Entgegenhaltungen:
- AT-A- 296 397
- CH-A- 656 277

## Beschreibung

Die Erfindung betrifft ein Telekommunikationssystem mit einer speicherprogrammierten Systemsteuerung, durch die u.a. leistungsmerkmalsspezifische Steuerprozeduren steuerbar sind, und mit endgeräteindividuell zuweisbaren Speicherbereichen von Speichereinheiten, in denen Informationen über die jeweilige Anschlußart der daran angeschlossenen und wahlweise miteinander bzw. mit einer Amtsleitung zu verbindenden Fernsprechendgeräte und der aktuelle Zustand einspeicherbar ist und wobei mindestens ein Endgerät als ein zumindest einen entsprechend ausgelegten Mikrofon- und Lautsprecherkreis enthaltendes und eine Türfreisprechstellenfunktion ermöglichendes Sonderendgerät ausgebildet ist, zu dem bedarfsweise vermittels eines der anderen Fernsprechendgeräte eine Sprechverbindung schaltbar und ein Türverriegelungs- bzw. Türentriegelungsmechanismus beeinflußbar ist.

Solche programmgesteuerten Kommunikationssysteme dienen zur Verbindung von Endgeräten untereinander und zur Verbindung dieser Endgeräte mit an andere Kommunikationsnetze angeschlossenen Endgeräten. In einem Nebenstellenkommunikationssystem sind je nach seinem Komplexitätsgrad Endgeräte mit vielfältigen Leistungsmerkmalen anschließbar, z.B. analoge und digitale Telefone und auch der Datenübertragung dienende Terminals. Das zugrundeliegende Kommunikationssystem besteht im Prinzip aus einer Vielzahl von vermittlungstechnischen Funktionseinheiten und einem programmierbaren digitalen Rechnersystem das diese Funktionseinheiten steuert und alle vermittlungstechnischen Abläufe überwacht. Dazu ist es erforderlich, daß das Rechnersystem mit Informationen über den Betriebszustand der Funktionseinheiten und über Zustandsänderungen, insbesondere über Eingaben an den angeschlossen Endgeräten informiert wird. Es kann deshalb bei Bedarf umgehend entsprechende Steueranweisungen und Meldungen erstellen und ausgeben. Für die Steuerung der erforderlichen Abläufe greift die Systemsteuerung auf Informationen zurück, die in entsprechenden Speichereinheiten abgespeichert sind.

Insbesondere bei kleinen Telekommunikationssystemen ist es bekannt, als Teilnehmer eine Türfreisprechstelle vorzusehen. Der Anschluß dieser Türfreisprechstelle erfolgt über eine analoge Teilnehmerschnittstelle. Es gelten jedoch für eine derartige Teilnehmerstelle gewisse Funktionseinschränkungen gegenüber den anderen an das System angeschlossenen Endgeräten. Üblicherweise ist einer solchen Türfreispeichstelle ein Türöffner zugeordnet, der von einem Endgerät aus betätigt werden kann. Dies könnte beispielsweise durch das Aktivieren einer entsprechend programmierten Funktionstaste erfolgen. Um eine solche Türöffnerfunktion zu ermöglichen, wird z.B. für einen Türöffnermagneten ein Ansprechkreis im System selbst durch die Kontakte eines darin vorgesehenen Relais aktiviert. Unabhängig von der Tatsache, ob eine Türfreisprechstelle mit Türöffnerfunktion auch tatsächlich installiert wird muß also im System ein Relais für diesen möglichen Zweck vorgeleistet werden und es sind die für seine Ansteuerung notwendigen Steuerleitungen in jedem Fall vorzusehen.

Eine derartige Anordnung, bei der ein Relais in der Systemzentrale über eine zweite analoge Teilnehmerschnittstelle angesteuert wird, ist aus der CH-A-656 277 bekannt.

Es ist die Aufgabe der Erfindung eine große Flexibilät im Zusammenhang mit der Installierung einer Türfreisprechstelle zu ermöglichen. Dies wird dadurch erreicht, daß aufgrund einer an einem Endgerät erfolgten und durch die Systemsteuerung ausgewerteten Informationseingabe ein normalerweise zu einem anderen Zweck im Rahmen des Betriebes des Telekommunikationssystems verfügbares Steuersignal an die zu dem Sonderendgerät führende Anschlußleitung durch die Systemsteuerung angelegt wird, daß dieses Steuersignal mittelbar oder unmittelbar ein zwischen den systemseitigen Anschlußpunkten und dem Sonderendgerät mit dieser Anschlußleitung gekoppeltes Schalterelement wirksam schaltet, das seinerseits die Freigabe des Türverriegelungsmechanismus veranlaßt.

Es wird also nicht grundsätzlich ein Relais im System vorgeleistet, sondern es wird ein außerhalb des eigentlichen Systems bedarfsweise vorzusehendes Schalterelement, durch das die Türöffnerfunktionen beeinflußt wird, angeordnet. Im System wird die normale Hardware der Teilnehmerschnittstelle und die übliche Verdrahtung genutzt. Durch gezieltes Anschalten des sowieso verfügbaren Steuersignals wird dann die Türöffnerfunktion bewirkt. Ein derartiges Steuersignal könnte beispielsweise ein von einem bereits vorhandenen Sender geliefertes Mehrfrequenz-Codezeichen sein. Bei Verwendung der wechselspannungsförmigen Rufsignale ergeben sich insbesondere hinsichtlich der notwendigen Auswertung besonders einfache Verhältnisse. Derartige Rufsignale werden üblicherweise in einem Ruftongenerator einer zentralen Signaleinrichtung erzeugt und über eine Rufleitung an die Leitungsanschlußeinrichtungen verteilt. In diesen Anschlußeinrichtungen werden jeweils durch eine vorgegebene Rufprozedur Schaltmittel gesteuert, durch die diese Rufsignale an die jeweilige Anschlußleitung anschaltbar sind. Das Schalterelement, das beispielsweise durch ein Relais gebildet wird und die der Auswertung des jeweils gewählten Steuersignals dienenden Bauelemente sind in einer Zusatzeinheit zusammengefaßt, die dem die Türfreisprechstellenfunktion ermöglichenden Sonderendgerät unmittelbar örtlich zugeordneten Zusatzeinheit zusammengefaßt oder sie sind in diesem Sonderendgerät zusätzlich enthalten. Dabei ergibt sich ein äußerst geringer Verdrahtungsaufwand.

Gemäß einer Weiterbildung der Erfindung dient als Schalterelement ein Relais, das durch die vermittels einer Gleichrichter-Anordnung gleichgerichtete Rufwechselspannung wirksam geschaltet wird, wobei durch die erfolgte Betätigung eines relaiseigenen Kontaktes der Ansprechkreis für ein zur Freigabe des Türverriegungsmechanismus dienendes Steuerelement geschlossen wird. Dieses Steuerelement kann in einfacher Weise durch einen üblichen Türöffnermagnet realisiert sein. Die Spannungsversorgung für den Ansprechkreis erfolgt gemäß einer Weiterbildung der Erfindung durch ein systemunabhängiges und dem Sonderendgerät unmittelbar örtlich zugeordnetes oder in ihm integriertes Netzgerät. Es ist also dann in einfacher Weise in der erwähnten Zusatzeinheit lediglich für die Aktivierung des Ansprechkreises ein Kontakt zu betätigen.

Weitere vorteilhafte Ausgestaltungen der Erfindung sind in restlichen Unteransprüchen zu entnehmen.

Im folgenden wird das erfindungsgemäße Telekommunikationssystem insbesondere im Hinblick auf die daran angeschlossene Türfreisprechstellen anhand eines vereinfachten Blockschaltbildes näher erläutert.

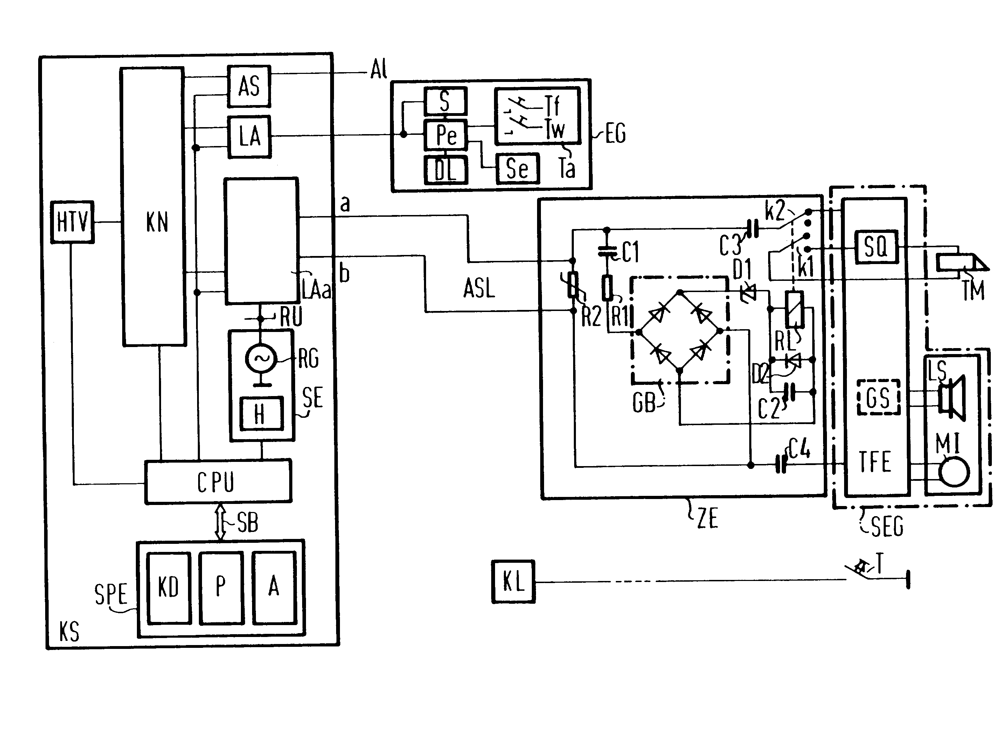

Das Telekommunikationssysten KS kann beispielsweise ein sogenanntes kleines Nebenstellenkommunikationssystem darstellen, an das eine Mehrzahl von Telefonendgeräten anschließbar sind. Stellvertretend für diese Endgeräte ist in der Figur lediglich das Endgerät EG und das Sonderendgerät SEG als unterschiedliche Ausführungsform angedeutet. Es sind grundsätzlich auch andere Geräte wie Telefaxgeräte und über Modems auch Datensicht- und Datenverarbeitungsgeräte anschließbar. Das Kommunikationssystem kann mit den öffentlichen Telekommunikationsnetz über mindestens eine Amtsleitung AL oder auch mit anderen Telekommunikationssystemen verbunden sein. Das Telekommunikationssystem besteht im Prinzip aus einzelnen, untereinander verbundenen modularen Einheiten. Als Schnittstelleneinrichtungen zu den Endgeräten sind in Abhängigkeit von der Art der angeschlossenen Kommunikationsendgeräte, die sowohl digitale als auch analoge Kommunikationsendgeräte darstellen können, unterschiedliche Anschaltungsbaugruppen, symbolisiert durch die Einheit LA bzw. AS, vorgesehen. Durch sie werden u.a. unterschiedliche Signalisierungsinformationen von den Endgeräten oder den Netzen auf ein innerhalb des Kommunikationssystems einheitlich verwendetes Format umgewandelt. Eine weitere wesentliche Einheit bildet die Koppeleinrichtung KN, die die Sprechverbindungen zwischen den Endgeräten untereinander oder zwischen den Endgeräten und angeschlossenen Telekommunikationsnetzen durchgeschaltet. Weiterhin ist eine zentrale Signaleinrichtung SE vorhanden, die neben den für die Erzeugung der Hörtöne vorgesehenen Modul H einen für die Erzeugung der Rufspannung RU zuständigen Ruftongenerator RG enthält. Die von ihm gelieferten Rufsignale werden über eine gemeinsame Rufleitung den Anschaltebaugruppen LA zugeführt und an die jeweilige Anschlußleitung angelegt. Insbesondere für die auf den externen Leitungen abzusetzende Wahlinformation wird ein MFV-Sendermodul benutzt, das die nach dem Mehrfrequenzcodeverfahren erforderlichen Frequenzen erzeugt. Dieses MFV-Sendermodul könnte auch Teil der Signaleinrichtung SE sein.

Sämtliche modularen Einheiten sind mit einer zentralen Steuerung verbunden. Diese zentrale Steuerung besteht aus der Systemsteuerung CPU und der zentralen Speichereinrichtung SPE. Diese gliedert sich grundsätzlich in einen Kundendatenspeicher KD, einen Programmspeicher P und einen Arbeitsspeicher A. Im Programmspeicher P sind u.a. das Anlagenbetriebsprogramm abgespeichert. In dem Speicherteil KD sind die Kundendaten, wie z.B. die den einzelnen Kommunikationsendgeräten EG zugeteilten Berechtigungen abgelegt. Außerdem sind darin weitere Besonderheiten dieser Endgeräte abgespeichert. Der Arbeitsspeicher A dient u.a. der Aufnahme von temporären Daten zur Programmablaufsteuerung. Durch die Systemsteuerung werden die Funktionen der einzelnen Einheiten überwacht, diese Einheiten werden zur Ausführung ihrer spezifischen Funktionen angeregt und es werden von diesen Einheiten Daten entgegengenommen.

Die im Speicherteil KD abgelegten Kundendaten können beispielsweise durch ein als betriebstechnische Einrichtung vorbestimmtes Teilnehmerendgerät, beispielsweise das Endgerät EG konfiguriert werden. In einer entsprechenden Konfigurationsliste sind beispielsweise die systemseitig vorhandenen Steuerrelais definiert. Ein angeschlossenes Fernsprechendgerät EG, das zur endgerätspezifischen Signalisierungsverarbeitung über die Schnittstelle LA mit dem System verbunden ist, weist ein Display DL und eine Tastatur Ta auf. Die Taste Tw symbolisiert die übliche Wähltastatur. Durch die Taste Tf soll das Vorhandensein von weiteren Funktionstasten symbolisiert werden. Der Tastenblock Ta ist mit einer z.B. durch einen Prozessor realisierten Steuereinheit Pe gekoppelt. Mit dieser Steuereinheit ist ferner eine Schnittstelleneinheit S verbunden, durch die diejenigen Signalisierungsinformationen an das Vermittlungssystem KS weitergegeben werden, die jeweils einer bestimmten Taste bei ihrer Betätigung zugeordnet sind. Weiterhin ist diese Schnittstelleneinrichtung S befähigt diejenigen Informationen zu registrieren, die dem Fernsprechendgerät EG durch das Vermittlungssystem zur weiteren Verarbeitung übermittelt werden. Zumindest ein Teil der abgehenden und ankommenden Signalierungsinformationen werden auf dem Display DL dargestellt. Die Einheit Se ist als Speicher ausgebildet und dient beispielsweise der Aufnahme eines Betriebsprogrammes für die Steuereinheit Pe und zwischenzuspeichernder Daten.
Als Pseudoteilnehmer kann über eine analoge Schnittstelle LAa ein Sonderendgerät SEG zweiadrig angeschlossen werden, mit dem die Funktionen einer sogenannten Tür bzw. Torsprechstelle realisiert sind. Über einen Türfreisprechverstärker TFE der auch die übliche Gabelschaltung, angedeutet durch die Einheit GS, beinhaltet ist ein Mikrofon MI bzw. ein Lautsprecher LS angeschlossen. Durch die Betätigung einer Taste T kann sich eine Person von der Außentüre aus bemerkbar machen. Durch diese Tastenbetätigung kann beispielsweise eine Klingel-Signalisierung erfolgen, so daß über eine eigene Hausklingelanlage eine Klingel KL aktiviert wird. Es ist auch bekannt, mit der Betätigung einer solchen Taste T eine Wechselspannung an eine Amtsanschaltung AS anzulegen, so daß ähnlich wie im Falle eines ankommenden Rufes eine Signalisierung erzeugt wird. Es ist dabei sinnvoll, eine Rufunterscheidung der akustischen Signalisierung zwischen einem eigentlichen Amtsanruf und dieser in Verbindung mit einer Türsprechstelle initialisierter Signalisierung vorzunehmen. Das Sonderendgerät SEG der Tür-Freisprecheinrichtung kann mittels betriebstechnischer Aufträge einer beliebigen Teilnehmerlage zugeordnet und im Kundendatenspeicher KD als solche definiert werden. Insbesondere bei kleinen Kommunikationssystemen kann vorgesehen sein, daß von jedem Endgerät aus die Türfreisprecheinrichtung abgefragt werden kann. Dies kann beispielsweise von dem Endgerät EG aus dadurch erfolgen, daß entweder eine vorhandene Funktionstaste betätigt wird oder eine charakteristische Ziffernkombination und/oder Steuerzeichencode durch einen Teilnehmer eingegeben wird. Nach Auswertung dieser eingegebenen Informationen veranlaßt die zentrale Systemsteuerung CPU einen Verbindungsaufbau zwischen dem Endgerät EG und der Türfreisprecheinrichtung, die durch das Sonderendgerät SEG gebildet wird. Für das Gespräch mit dieser besonderen Teilnehmerstelle ist ein dauernder Gleichstrom-Leitungsschleifenschluß der Anschlußleitung ASL nicht erforderlich. Während eines solchen Gespräches ist nämlich keine Speisung notwendig, so daß an der Türsprechstelle die Anschlußleitung durch die Kondensatoren C3 und C4 gleichstrommäßig abgeriegelt sein kann. Die Türsprechstellenschaltung weist einen sehr hochohmigen Eingang auf und es findet nur die Übertragung der Sprechwechselströme statt.

Von dem Endgerät EG aus kann ein Türöffner betätigt werden, der durch den Öffnungsmagneten TM in der Zeichnung symbolisiert ist. Die hierzu notwendige Signalisierung erfolgt über die Anschlußleitung ASL aufgrund einer an dem Endgerät EG erfolgten Informationseingabe. Diese Eingabe kann beispielsweise durch die Betätigung einer bestimmten Funktionstaste Tf vorgenommen werden. Mittels des Anlagenbetriebsprogrammes wird daraufhin nach der Auswertung der übermittelten Informationen durch die Systemsteuerung CPU die Anschaltung der vom Generator RG gelieferten Rufwechselspannung RU an die Anschlußleitung ASL veranlaßt. Dies kann beispielsweise durch die Aktivierung der innerhalb der Schnittstellenschaltung LAa vorhandenen Schalter geschehen. Die Wechselspannung wird in der Zusatzeinrichtung ZE erkannt und führt zur Aktivierung des Türöffnermagneten TM. Die an die Übertragungsleitung ASL angeschaltete Rufwechselspannung RU wird über den Kondensator C1 und dem Widerstand R1 der aus Dioden gebildeten Gleichrichterschaltung GB zugeführt. Die gleichgerichtete Rufwechselspannung liegt über der Zenerdiode D1 an dem Relais RL an. Parallel zur Ansprechwicklung des Relais ist die Rücklaufdiode D2 geschaltet, die zur Unterdrückung der beim Abschalten des Relais entstehenden Stromimpulse dient. Der ebenfalls parallel zur Wicklung des Relais RL liegende Kondensator C2 dient als Entstörkondensator. Durch die Zenerdiode D1 wird sichergestellt, daß bei entsprechender Wahl ihres Begrenzungswertes in dem Spannungsbereich der sich für die Sprachübertragung ergibt keine Impedanzverringerung durch den Relaiskreis erfolgt. Mit dem Ansprechen des Relais RL durch die angelegte Rufwechselspannung werden die relaiseigenen Kontakte k1 und k2 aus der eingezeichneten Ruhelage in die Arbeitslage geschaltet. Mit dem Kontakt k2 wird der Sprechweg geöffnet, damit aufgrund der angelegten Rufwechselspannungssignale keine dadurch ausgelösten störenden Geräusche durch den Lautsprecher LA abgegeben werden. Mit dem Kontakt k1 wird ein Ansprechkreis für den Türöffnermagneten TM geschlossen.

Die hierzu notwendige Versorgungsspannung wird von einem dem Türfreisprechverstärker TFE zugeordneten Steckernetzteil geliefert. Das Netzteil kann in dem Sonderendgerät SEG integriert sein. Das Zurverfügungstellen der notwendigen Versorgungsspannung wird durch die Einheit SQ symbolisiert. Sinnvollerweise erfolgt die Installation der Zusatzeinrichtung ZE in unmittelbarer Nähe des Sonderendgerätes SEG bzw. des Türfreisprechverstärkers TFE. Dieser Türfreisprechverstärker ist in der Regel räumlich getrennt von der das Mikrofon MT und den Lautsprecher LS enthaltenden Einheit. Durch das Einbringen des Relais RL in der vom eigentlichen Kommunikationssystem KS getrennt angeordneten Zusatzeinrichtung ZE läßt sich die normale Hardware der Teilnehmerstelle und die normale Verdrahtung nutzen. Durch die Systemsteuerung erfolgt lediglich das gezielte Zuschalten der Rufspannung an die betreffende Anschlußleitung ASL. Die Elemente der Zusatzeinrichtung ZE könnten in einem Gehäuse, das ähnlich der üblichen Anschlußdosen ausgebildet ist, untergebracht werden oder sie könnten auch in der Türfreisprecheinrichtung TFE integriert sein. Es ist also nicht mehr grundsätzlich ein Relais im System selbst vorzuleisten für das eine zusätzliche Verdrahtung vorzusehen wäre. Dies ist insbesondere in sogenannten kleinen Kommunikationssystemen aus Kostengründen von Vorteil. Das die Türöffnerfunktion ermöglichende Relais ist innerhalb einer einfach ausgebildeten Zusatzeinrichtung ausschließlich nur bei einem tatsächlichen Bedarf zur Verfügung zu stellen.

## Patentansprüche

1. Telekommunikationssystem (KS) mit einer speicherprogrammierten Systemsteuerung (CPU), durch die u. a. leistungsmerkmalsspezifische Steuerprozeduren steuerbar sind, und mit u.a. endgeräteindividuell zuweisbaren Speicherbereichen von Speichereinheiten, in denen Informationen über die jeweilige Anschlußart der daran angeschlossenen und wahlweise miteinander bzw. mit einer Amtsleitung zu verbindenden Fernsprechendgeräte (EG) und der aktuelle Zustand einspeicherbar ist und wobei mindestens ein Endgerät als ein zumindest einen entsprechend ausgelegten Mikrophon- und Lautsprecherkreis enthaltendes und eine Türfreisprechstellenfunktion ermöglichendes Sonderendgerät (SEG) ausgebildet ist, zu dem bedarfsweise vermittels eines der anderen Fernsprechendgeräte eine Sprechverbindung schaltbar und ein Türverriegelungs- bzw. Türentriegelungsmechanismus beeinflußbar ist,
**dadurch gekennzeichnet,**
daß aufgrund einer an einem Endgerät (EG) erfolgten und durch die Systemsteuerung (CPU) ausgewerteten Informationseingabe ein normalerweise zu einem anderen Zweck im Rahmen des Betriebes des Telekommunikationssystems verfügbares Steuersignal an die zu dem Sonderendgerät führende Anschlußleitung (ASL) durch die Systemsteuerung (CPU) angelegt wird, daß dieses Steuersignal mittelbar oder unmittelbar ein zwischen den systemseitigen Anschlußpunkten (a, b) und dem Sonderendgerät mit dieser Anschlußleitung (ASL) gekoppeltes Schalterelement (RL) wirksam schaltet, das seinerseits die Freigabe des Türverriegelungsmechanismus (TM) veranlaßt.

2. Telekommunikationssystem nach Anspruch 1,
**dadurch gekennzeichnet,**
daß als Steuersignal ein für teilnehmerbezogene Vorgänge eingesetztes Signal verwendet wird.

3. Telekommunikationssystem nach Anspruch 2,
**dadurch gekennzeichnet,**
daß das Signal das Rufwechselspannungssignal (RU) darstellt.

4. Telekommunikationssystem nach Anspruch 1,
**dadurch gekennzeichnet,**
daß das Schalterelement (RL) und die der Auswertung des Steuersignals dienenden Bauelemente in einem dem Sonderendgerät unmittelbar örtlich zugeordneten Zusatzeinheit (ZE) zusammengefaßt sind oder in dem Sonderendgerät (SEG) zusätzlich enthalten sind.

5. Telekommunikationssystem nach den Ansprüchen 3 und 4,
**dadurch gekennzeichnet,**
daß als Schalterelement ein Relais (RL) dient, das durch die vermittels einer Gleichrichteranordnung (GB) gleichgerichtete Rufwechselspannung (RU) wirksam geschaltet wird, daß durch einen dabei betätigten relaiseigenen Kontakt (k1) der Ansprechkreis für ein zur Freigabe des Türverriegelungsmechanismus dienendes Steuerelement (TM) geschlossen wird.

6. Telekommunikationssystem nach Anspruch 5,
**dadurch gekennzeichnet,**
daß die Spannungsversorgung für den Ansprechkreis durch ein systemunabhängiges und dem Sonderendgerät unmittelbar örtlich zugeordnetes oder in ihm integriertes Netzgerät (SQ) erfolgt.

7. Telekommunikationssystem nach Anspruch 5,
**dadurch gekennzeichnet,**
daß als Steuerelement ein sogenannter Türöffnermagnet (TM) dient.

8. Telekommunikationssystem nach Anspruch 5,
**dadurch gekennzeichnet,**
daß die gleichgerichtete Rufwechselspannung (RU) über ein Begrenzungselement (D1), das lediglich für oberhalb des üblicherweise auftretenden Sprachspannungspegels liegende Spannungswerte durchlässig ist, dem Relais (RL) zugeführt wird.

9. Telekommunikationssystem nach Anspruch 5,
**dadurch gekennzeichnet**,
daß der Sprechkreis durch einen weiteren relaiseigenen Kontakt (k2) während der Zeit des Auftretens der Rufwechselspannung geöffnet wird.

## Claims

1. Telecommunications system (KS) having a stored-program system controller (CPU), by means of which, inter alia, control procedures which are specific to performance features can be controlled, and having, inter alia, memory areas in memory units which can be assigned to specific terminals and in which information about the respective subscriber category of the telephone terminals (EG) which are connected to it and can optionally be connected to one another or to an exchange line, and information about the current state can be stored, and at least one terminal being designed as a special terminal (SEG) which allows a door release interphone function and contains at least one appropriately designed microphone and loudspeaker circuit, to which a voice connection can be connected, if required, by means of one of the other telephone terminals and a door locking and door unlocking mechanism can be influenced, characterized in that, on the basis of an information input which is made on a terminal (EG) and is evaluated by the system controller (CPU), a control signal which is normally available for another purpose in the course of operation of the telecommunications system is applied by the system controller (CPU) to the connecting line (ASL) leading to the special terminal, in that this control signal indirectly or directly enables a switch element (RL) which is coupled to this connecting line (ASL) between the connection points (a, b) on the system side and the special terminal and, for its part, initiates the release of the door locking mechanism (TM).

2. Telecommunications system according to Claim 1, characterized in that a signal which is used for subscriber-related processes is used as the control signal.

3. Telecommunications system according to Claim 2, characterized in that the signal represents the AC ringing voltage signal (RU).

4. Telecommunications system according to Claim 1, characterized in that the switch element (RL) and the components which are used to evaluate the control signal are combined in an additional unit (ZE) which is directly physically assigned to the special terminal, or are additionally contained in the special terminal (SEG).

5. Telecommunications system according to Claims 3 and 4, characterized in that a relay (RL) is used as the switch element and enabled by the AC ringing voltage (RU) which has been rectified by means of a rectifier arrangement (GB), in that a contact (k1) which is part of the relay and is operated in this case closes the operating circuit for a control element (TM) which is used to release the door locking mechanism.

6. Telecommunications system according to Claim 5, characterized in that the voltage supply for the operating circuit is produced by a power supply unit (SQ) which is independent of the system, is directly physically assigned to the special terminal, or is integrated in it.

7. Telecommunications system according to Claim 5, characterized in that a so-called door opener magnet (TM) is used as the control element.

8. Telecommunications system according to Claim 5, characterized in that the rectified AC ringing voltage (RU) is supplied to the relay (RL) via a limiting element (D1) which passes only voltage values which are above the normally occurring speech voltage level.

9. Telecommunications system according to Claim 5, characterized in that the speech circuit is opened by a further contact (k2), which is part of the relay, during the time when the AC ringing voltage occurs.

## Revendications

1. Système (KS) de télécommunication comportant une commande (CPU) de système par programme enregistré, par laquelle on peut commander entre autres des procédures de commande spécifiques à des facilités offertes à l'usager, et des zones de mémoire, qui peuvent être affectées entre autres de manière individuelle à des terminaux, d'unités de mémorisation, dans lesquelles on peut mémoriser des informations concernant le genre de raccordement des terminaux (EG) téléphoniques qui y sont raccordés et qui peuvent être reliés au choix entre eux ou à une ligne réseau et l'état du moment, au moins un terminal étant réalisé en terminal (SEG) spécialisé, qui comprend au moins un circuit de microphone et un circuit de haut-parleur conçus de manière appropriée, qui permet un fonctionnement en interphone à mains libres et auquel on peut, au besoin, au moyen de l'un des autres terminaux téléphoniques, connecter une liaison phonique et influencer un mécanisme de verrouillage de porte et un mécanisme de déverrouillage de porte,
caractérisé en ce que
sur la base d'une entrée d'information effectuée sur un terminal (EG) et exploitée par la commande (CPU) du système, un signal de commande normalement disponible à d'autres fins relevant du fonctionnement du système de télécommunication est appliqué par la commande (CPU) du système à la ligne (ASL) de raccordement allant au terminal spécialisé, en ce que ce signal de commande connecte de manière active, directement ou indirectement, un élément (RL) interrupteur qui est couplé entre les points (a, b) de raccordement du système et le terminal spécialisé par cette ligne (ASL) de raccordement et qui, pour sa part, provoque le dégagement du mécanisme (TM) de verrouillage de porte.

2. Système de télécommunication suivant la revendication 1,
caractérisé en ce que
l'on utilise comme signal de commande un signal utilisé pour des opérations relatives aux abonnés.

3. Système de télécommunication suivant la revendication 2,
caractérisé en ce que
le signal constitue le signal (RU) de tension alternative d'appel.

4. Système de télécommunication suivant la revendication 1,
caractérisé en ce que
l'élément (RL) interrupteur et les composants servant à exploiter le signal de commande sont réunis dans une unité (ZE) auxiliaire associée localement directement au terminal spécialisé ou sont contenus en plus dans le terminal (SEG) spécialisé.

5. Système de télécommunication suivant les revendications 3 et 4,
caractérisé en ce que
l'on utilise comme élément interrupteur un relais (RL), qui est branché de manière active par la tension (RU) alternative d'appel redressée au moyen d'un montage (GB) redresseur, en ce que le circuit de réponse destiné à un élément (TM) de commande servant à dégager le mécanisme de verrouillage de porte est fermé par un contact (k1) actionné propre au relais.

6. Système de télécommunication suivant la revendications 5,
caractérisé en ce que
l'alimentation en tension du circuit de réponse s'effectue par une unité (SQ) d'alimentation de réseau qui est indépendante du système et qui est associée de manière localisée directement au terminal spécialisé ou qui y est intégrée.

7. Système de télécommunication suivant la revendications 5,
caractérisé en ce que
l'on utilise comme élément de commande ce que l'on appelle un aimant (TM) de gâche électrique.

8. Système de télécommunication suivant la revendications 5,
caractérisé en ce que
la tension (RU) alternative d'appel redressée est envoyée au relais (RL) par l'intermédiaire d'un élément (D1) de limitation, qui n'est passant que pour des valeurs de tension supérieures au niveau de tension pour la communication par la parole qui apparaît usuellement.

9. Système de télécommunication suivant la revendications 5,
caractérisé en ce que
le circuit téléphonique est ouvert par un contact (k2) supplémentaire, propre au relais, pendant la durée de l'apparition de la tension alternative d'appel.
